# EUROPEAN PATENT SPECIFICATION

(11) **EP 1 735 362 B1**
(45) Date of publication and mention of the grant of the patent: **24.09.2008**
(21) Application number: 05716356.0
(22) Date of filing: 24.03.2005
(51) Int. Cl.: C08G 18/10, C08G 18/48, C08G 18/76

(54) **LOW-HARDNESS THERMOSETTING POLYURETHANE ELASTOMER AND PRODUCTION METHOD THEREOF**
WÄRMEHÄRTBARES POLYURETHANELASTOMER MIT GERINGER HÄRTE UND HERSTELLUNGSVERFAHREN DAFÜR
ELASTOMERE DE POLYURETHANNE THERMODURCISSABLE A FAIBLE DURETE, ET SON PROCEDE DE PRODUCTION

(30) Priority: 05.04.2004 JP 2004111179
(43) Date of publication of application: 27.12.2006
(73) Proprietor: Bayer MaterialScience AG, 51368 Leverkusen (DE)
(72) Inventor: TOKUSHIGE, Tsutomu, Kawabe-gun, Hyogo 666-0257 (JP); SANJO, Takeshi, Nishinomiya City, Hyogo 663-8127 (JP); MANO, Takashi, Niihama City, Ehime 792-0025 (JP)
(86) International application number: PCT/EP2005/003151
(87) International publication number: WO 2005/097860

(56) References cited:
- EP-A- 1 110 984
- GB-A- 1 218 360
- US-A- 4 267 044
- US-A- 5 998 574
- PATENT ABSTRACTS OF JAPAN vol. 1996, no. 10, 31 October 1996 (1996-10-31) & JP 08 151423 A (MITSUBISHI CHEM CORP), 11 June 1996 (1996-06-11) cited in the application
- PATENT ABSTRACTS OF JAPAN vol. 2003, no. 12, 5 December 2003 (2003-12-05) & JP 2003 252947 A (ASAHI GLASS CO LTD), 10 September 2003 (2003-09-10) cited in the application
- PATENT ABSTRACTS OF JAPAN vol. 2002, no. 06, 4 June 2002 (2002-06-04) -& JP 2002 037839 A (MITSUI TAKEDA CHEMICALS INC), 6 February 2002 (2002-02-06)

## Description

### Technical Field of the invention

The present invention relates to a thermosetting polyurethane elastomer (for example, polyurethane elastomer moldings) having a low hardness and to a method of producing it.

### Background of the invention

A thermosetting polyurethane elastomer is often used in, for example, OA apparatus parts such as an electric static roller, a developing roller, a transferring roller and a paper-forwarding roller used in a copying machine, a facsimile machine and the like by utilizing excellent properties such as mechanical properties and rubber-like elasticity.

The thermosetting polyurethane elastomer used in these applications, however, has been required to have good properties such as a further lower hardness (JIS A hardness: at most 40), a smaller compression set, better dimensional stability, and no bleeding property, and the said elastomer is necessary. Simultaneously with having good properties, a production method having good productivity is also required such that the elastomer can be molded even in a mold at a relatively low temperature without decreasing a curing rate, in the production of the thermosetting polyurethane elastomer molded article.

For the purpose of producing the thermosetting polyurethane elastomer having low hardness, mentioned is a method of adding a large amount of plasticizer, but this method has the problems such as the deterioration of mechanical properties, the increase of compression set and the deterioration of surface tackiness caused by the bleeding of plasticizer.

Mentioned is a method of decreasing a crosslink density by using raw materials having low functionality, but this method has the problems that the mechanical properties are deteriorated such as the increase of compression set.

It is necessary to increase the activity of high molecular weight polyol used as raw materials and to increase the curing rate so as to give the low-hardness thermosetting polyurethane elastomer having good productivity, which elastomer can be molded in a mold at a relatively low temperature without decreasing a curing rate. However, the high molecular weight polyol having the high activity has tendency of having the increased moisture absorption (water absorption ratio), and whereby the dimensional stability is deteriorated.

Mentioned is a method of using a high molecular weight polyol having a low activity as the method of reducing the moisture absorption. However this method has the problems such as the lower productivity caused by the decreased curing rate, the frequent residence of unreacted reactants caused by low reactivity, and the deterioration of surface tackiness caused by the bleeding.

Accordingly, desired is the development of the method of producing the low-hardness thermosetting polyurethane elastomer having low moisture adsorption, good dimensional stability and high curing rate, which elastomer does not cause the increased compression set and surface tackiness because of the bleeding, and the development of a molded article thereof.

Some proposals are made on the thermosetting polyurethane elastomer having low hardness, small compression set, good moldability and no bleeding property, and the method of producing said elastomer.

JP-A-8-151423 describes a molded article of flexible thermosetting polyurethane elastomer comprising:
an isocyanate group-terminated prepolymer obtained by reacting diphenylmethane diisocyanate and/or carbodiimide-modified diphenylmethane diisocyanate with a high molecular weight polypropylene glycol having an average functional group number of 3 to 6, and
a curing agent mainly comprising a high molecular weight polyfunctional polypropylene glycol.

JP-A-2003-252947 discloses a method of producing a thermosetting polyurethane elastomer without using a plasticizer, comprising reacting tolylene diisocyanate with a high molecular weight polyoxyalkylene polyol having an average hydroxyl group number of 2 to 3 and total unsaturation degree of at most 0.07meq/g to give an isocyanate-terminated prepolymer and then reacting said isocyanate group-terminated prepolymer with a curing agent which is a high molecular weight polyoxyalkylene polyol having an average hydroxyl number of 2 to 3.

In the technology of JP-A-8-151423, since the isocyanate-terminated prepolymer based on the high molecular weight polyfunctional polypropylene glycol has a high viscosity, the polyurethane elastomer disadvantageously has difficult workability and easily caused bad moldability. Since the low-activity polyoxypropylene glycol is used as the curing agent, this technology has the disadvantages that the reaction has the slow speed, the molding should be conducted at a relatively high mold temperature, and unreacted polyoxypropylene glycol remains to easily cause the bleeding.

In the technology of JP-A-2003-252947, since the reaction between the isocyanate terminated prepolymer and the curing agent has a slow speed so that unreacted polyol easily remains, this technology has disadvantages that the bleeding is easily caused, the large amount of catalyst is necessary to increase the curing rate and the molding should be conducted at a relatively high mold temperature.

### Disclosure of the Invention

Problems to be solved by the Invention

An object of the present invention is to give a low-hardness thermosetting polyurethane elastomer having a low JIS A hardness of 10 to 40, a small compression set, a low moisture absorption, good dimensional stability and no bleeding property, which can be molded without a decrease of curing rate even at a relatively low mold temperature.

### Means for Solving Problems

The present inventors intensively studied to solve the above problems, and then discovered the following low-hardness thermosetting polyurethane elastomer and a method of producing it and completed the present invention.

The present invention relates to a method of producing a low-hardness thermosetting polyurethane elastomer having a compression set of at most 3 % according to JIS K 7312 and a JIS A hardness of 10 to 40 as measured by a Spring-type hardness tester according to JIS K 7312, comprising mixing and reacting (1) an isocyanate group-terminated prepolymer, (2) a curing agent and optionally an additive, **characterized in that**
the isocyanate group-terminated prepolymer (1) has a NCO content from 3 % to 6 % by weight and is formed from (1a) an organic polyisocyanate and (1b) a polyol,
the organic polyisocyanate (1a) is 4,4'-diphenylmethane diisocyanate alone containing at most 3 % by weight of 2,2'- and 2,4'-diphenylmethane diisocyanate or a polymethylene polyphenyl polyisocyanate containing 4,4'-diphenylmethane diisocyanate containing at most 3 % by weight of 2,2'- and 2,4'-diphenylmethane diisocyanate,
the polyol (1b) comprises a polyoxypropylene glycol having a degree of total unsaturation of at most 0.01 meq/g and a hydroxyl group number of 2 and a number average molecular weight from 5,000 to 20,000,
the curing agent (2) comprises (2a) a polyol and (2b) a catalyst for urethane formation, and the polyol (2a) comprises a polyoxyalkylene polyol having a degree of total unsaturation of at most 0.01 meq/g, a hydroxyl group number of 2 to 3, a number average molecular weight from 2,000 to 10,000 and a proportion of primary terminal hydroxyl group of at least 80 %.

The low-hardness thermosetting polyurethane elastomer of the present invention is characterized in that it exhibits a compression set of at most 3% according to JIS K 7312, and a JIS A hardness of 10 to 40 by a Spring-type hardness tester according to JIS K 7312.

The low-hardness thermosetting polyurethane elastomer is generally a molded article.

### Effect of the Invention

The use of the above-mentioned specific composition can give the low-hardness thermosetting polyurethane elastomer having the compression set of at most 3% according to JIS K 7312, the JIS A hardness of 10 to 40, low moisture absorption, good dimensional stability, no bleeding and good productivity, which can be molded without a decrease of curing rate even at a relatively low mold temperature produced.

### Best Embodiments for Carrying out the Invention

The isocyanate group-terminated prepolymer (1) used in the present invention can be prepared from an organic polyisocyanate (1a) and a polyol (1b) in a conventional method.

The organic polyisocyanate (1a) used in the present invention is 4,4'-diphenylmethane diisocyanate alone or a polymethylene polyphenyl polyisocyanate containing 4,4'-diphenylmethane diisocyanate.

4,4'-Diphenylmethane diisocyanate is diphenylmethane diisocyanate having two NCO groups and two benzene rings in one molecule, is referred to as "binuclear substance", and contains isomeric 2,2'- and 2,4'-diphenylmethane diisocyanate in a small amount. The total content of 2,2'- and 2,4'-diphenylmethane diisocyanate contained in 4,4'-diphenylmethane diisocyanate is at most 3 % by weight, preferably at most 2 % by weight. When the total content of 2,2'- and 2,4'-diphenylmethane diisocyanate is at most 3 by weight, the curing rate is high, and the bleeding and the like do not occur.

The polymethylene polyphenyl polyisocyanate containing 4,4'-diphenylmethane diisocyanate is composed of binuclear diphenylmethane diisocyanate, and a polynuclear substance having at least three NCO groups and benzene rings in one molecule. The content of the binuclear 4,4'-diphenylmethane diisocyanate in the polymethylene polyphenyl polyisocyanate containing 4,4'-diphenylmethane diisocyanate is preferably at least 65% by weight, more preferably at least 75% by weight. 85% by weight is particularly preferable. The total content of 2,2'- and 2,4'-diphenylmethane diisocyanate is at most 3 % by weight, more preferably at most 2% by weight.

The polyol (1b) used in the present invention is a polyoxypropylene glycol having a total unsaturated degree of at most 0.01 meq/g, which is prepared by adding propylene oxide to propylene glycol or water as a starting material in the presence of a catalyst. Particularly preferably is the polyoxypropylene glycol having a secondary terminal hydroxyl group which is prepared in the presence of a double metal cyanide complex (DMC) as the catalyst.

Since the polyoxypropylene glycol having a secondary terminal hydroxyl group does not have the added ethylene oxide so that it is not hydrophilic, the molded article has low moisture absorption and good stability.

The number average molecular weight of the polyoxypropylene glycol is from 5,000 to 20,000, particularly from 8,000 to 12,000. The molecular weight in the range between 5,000 and 20,000 gives the molded article having low hardness and small compression set.

The polyoxypropylene glycol may be a mixture of at least two, and the mixture has a number average molecular weight of 5,000 to 20,000 and a total unsaturation degree of at most 0.01 meq/g as in the above-mentioned range.

If the total unsaturation degree of the polyoxypropylene glycol is larger than 0.01 meq/g, disadvantageously, a large amount of monools are present to increase a molecular weight between crosslinked sites and to increase the compression set. In addition, the unreacted monools bleed to cause a problem of surface adhesion.

The isocyanate group-terminated prepolymer (1) can be prepared by a conventional method, for example, by mixing and stirring 4,4'-diphenylmethane diisocyanate alone or the polymethylene polyphenyl polyisocyanate containing 4,4'-diphenylmethane diisocyanate with polyoxypropylene glycol having the total unsaturation degree of at most 0.01 meq/g under dry nitrogen gas stream at 70 to 100 degrees C for 5 to 30 hours to heat and react them.

The content of isocyanate group in the isocyanate group-terminated prepolymer (1) is from 3% to 6% by weight, particularly preferably from 4% to 5% by weight. When the content of isocyanate group is from 3% to 6% by weight, the prepolymer has a low viscosity to give good workability, a bad molding and the like can not easily occur, and a low hardness can be easily achieved.

The isocyanate group-terminated prepolymer (1) preferably has a viscosity range between 5,000 and 25,000 mPas/25 degrees C. More preferable viscosity range is between 9,000 and 15,000 mPa.s/25 degrees C.

The curing agent (2) used in the present invention comprises the polyol (2a) and the catalyst for urethane formation (2b).

The polyol (2a) used in the present invention is a polyoxyalkylene polyol having 2 to 3 hydroxyl groups and a total unsaturation degree of at most 0.01meq/g. The number of carbon atoms of oxyalkylene group in the polyoxyalkylene polyol may be from 2 to 10, particularly from 2 to 4. The polyoxyalkylene polyol can be prepared by adding, for example, propylene oxide and/or ethylene oxide to a starting material in the presence of a catalyst. A polyoxyalkylene polyol having a primary terminal hydroxyl group which is prepared by using a double metal cyanide complex (DMC) as the catalyst is particularly preferably.

The starting material suitable for the present invention is a dihydric or trihydric polyhydroxyl compound. Specific examples of the starting material include ethylene glycol, propylene glycol, glycerin and trimethylol propane.

The number average molecular weight of the polyoxyalkylene polyol is from 2,000 to 10,000, particularly from 4,000 to 6,000. When the number average molecular weight is from 2,000 to 10,000, a molded article having low hardness and small compression set can be obtained.

If the average hydroxyl group number is smaller than 2, a molecular weight between the crosslinking sites is large to give the low hardness, but the compression set is large. In addition, if the average hydroxyl group number is smaller than 2, the amount of monool is large so that the bleeding is undesirably caused to give the residual surface tackiness. If the average hydroxyl group number is larger than 3, the molecular weight between crosslinking sites is undesirably decreased to increase the hardness.

The total unsaturation degree of the polyoxyalkylene polyol is at most 0.01meq/g. If the total unsaturation is larger than 0.01meq/g, a large amount of monool is present so that the unreacted monool bleed to give residual surface tackiness and the compression set is large.

The proportion of primary terminal is at least 80%, more preferably at least 85%. Because the terminal is primary, the polyoxyalkylene polyol is advantageously highly activated so that the curing reaction between the polyoxyalkylene polyol and the isocyanate group-terminated prepolymer (1) can be conducted by a small amount of the catalyst, and the unreacted polyoxyalkylene polyol advantageously does not remain so that the bleeding is absent to eliminate the surface tackiness.

The polyoxyalkylene polyol may be a mixture of at least two, and the mixture has an average hydroxyl number of 2 to 3, a number average molecular weight of 2,000 to 10,000 and a total unsaturation degree of at most 0.01meq/g.

As the catalyst for urethane formation (2b) used in the present invention, can be used a conventional catalyst for urethane formation. Examples thereof include an organic tin catalyst such as dibutyltin dilaurate, dioctyltin dilaurate and dibutyltin dioctoate; an amine catalyst such as triethylamine, triethylene diamine, 1,8-diazabicycloundecene (DBU), or a phenol salt, octylate salt and paratoluenesulfonate salt thereof. Among them, DBU salts are preferable, since a pot life is long at room temperature and the reaction is increased at a temperature of at least 70 degrees C to accelerate the curing.

The amount of the catalyst in the curing agent is preferably from 0.005 to 0.1 parts by weight, based on 100 parts by weight of the polyoxyalkylene polyol of the curing agent. 0.01 to 0.05 part by weight is more preferable. The amount of 0.005 to 0.1 parts by weight give a high curing rate (that is, a short period of time till the molded article is demoldable) with maintaining a sufficient pot life.

In addition to the isocyanate group-terminated prepolymer (1) and the curing agent (2), an additive such as a filler, stabilizer, a flame retardant, an electrically conducting agent and a mildew proofing agent may be added.

Examples of the filler include carbon black, aluminum hydroxide, calcium carbonate, titanium oxide, silica, talc and mica. Examples of the stabilizer include an antioxidant, a ultraviolet absorbing agent and a light stabilizing agent. Examples of the flame retardant include an alkyl phosphate and an organic bromine compound. Examples of the electrically conducting agent include an organic lithium salt, an organic sulfonium salt and carbon black.

The low-hardness thermosetting polyurethane elastomer molded article can be produced by reacting the isocyanate group-terminated prepolymer (1) with the polyol (2a) in the curing agent (2). In the reaction between the isocyanate group-terminated prepolymer (1) and the polyol (2a), an equivalent ratio of the isocyanate group in the isocyanate group-terminated prepolymer (1) to the active hydrogen (particularly the hydroxyl group) in the polyol (2a) is preferably from 0.95 to 1.2, more preferably from 1.0 to 1.1. When the ratio is from 0.95 to 1.2, good compression set, strength and dimensional stability are obtained without causing the problem of the bleeding.

The low-hardness thermosetting polyurethane elastomer molded article can be molded by mixing the isocyanate group-terminated prepolymer (1) and the curing agent (2) and thermally curing them in a mold. In this case, the temperature of the mold is preferably from 60 degrees C to 100 degrees C, particularly preferably from 70 degrees C to 90 degrees C. The temperature of 60 degrees C to 100 degrees C gives the easy casting, the sufficient reaction and the completion of the curing in a short period of time without bad curing. The resultant molded article can be demolded, thermally cured at 60 degrees C to 80 degrees C for 5 to 15 hours and cured at room temperature for one week to complete the reaction.

A method of casting the reaction mixture into the mold includes generally used various casting methods such as a cast molding.

By adjusting the pot life to 10 seconds to 20 seconds by means of the urethane formation catalyst and the like, the reaction mixture can be directly poured from an outlet of a machine onto a rotating rod for roller to mold a roller in a rotation molding method which is a special molding method.

The resultant molded article preferably has the compression set of 3%, particularly at most 1.0% according to JIS K 7312. The JIS A hardness of the spring-type hardness tester defmed by JIS K 7312 is preferably from 10 to 40, particularly from 15 to 35. The water absorption ratio is preferably at most 5.0%, particularly at most 4.0%. That is, the low-hardness thermosetting polyurethane elastomer molded article of the present invention is characterized in the compression set is small with maintaining the low hardness, the moisture absorption (the water absorption ratio) is small, the bleeding is eliminated, and the curing rate is not decreased even at a relatively low mold temperature. It also has the advantage that it is possible to use various processing methods such as a general casting method and a rotation molding method which is a specialized molding method.

### Examples

The following Examples and Comparative Examples further illustrate the present invention in detail. The present invention is not restricted by these Examples. Parts and % in these examples are in parts by weight and weight %, respectively, unless otherwise mentioned.

The measurement and the evaluation in the following Examples and Comparative Examples were conducted according to the following methods.

### Content of isocyanate group (NCO content)

The measurement was conducted according to JIS K1603.

### Hydroxyl group value

The measurement was conducted according to JIS K1557.

### Compression set

According to JIS K 7312, the sample having a diameter of 29 mm and a thickness of 12.7mm was compressed and fixed to 75% of thickness and then the compressed and fixed sample was heated at 70 degrees C for 22 hours.

After that the compress and fix was decontrolled and the decontrolled sample was left for 30 minutes at room temperature and then the thickness of the left sample was measured.

### Hardness

According to JIS K 7312, the hardness of the sheet having a thickness of 12mm was measured by type A of spring type hardness tester.

### Tensile test

According to JIS K 7312, the dumbbell No.3 test piece having a thickness of 2 mm was measured at the tensile speed of 500 mm/min. under the atmosphere of 23 degrees C and 65%RH.

### Curing rate

The mixture of the isocyanate group-terminated prepolymer and the curing agent was poured onto the hot iron plate having the same temperature as a mold. The mixture on the hot iron plate was cut by a spatula at a constant intervals, and the period of time when cutting line did not close by the curing from the initiation of mixing was determined to express a pot life and a cure rate.

### Water absorption ratio

The water absorption ratio relating to hygroscopicity was measured as a criterion of hygroscopicity. The evaluation was that hygroscopicity was large in case of high value of water absorption ratio and hygroscopicity was small in case of low value of water absorption ratio. According to JIS K7312, the sheet-shaped specimen having thickness of 2mm x width of 20 mm x length of 50mm was weighted as initial weight and then was immersed into the ion exchanged water for 22 hours at 23 degrees C and then the immersed specimen was took out and was weight after removing excess water on the surface by wiping off. The weight change was calculated from the weight of before and after putting specimens in the water.

### Bleeding property (surface tackiness)

The strip-shaped polyethylene film was pushed on the surface of the molded article and the bleeding property (surface tackiness) was evaluated by visual observation whether or not a deposit substance existed on the surface of the said strip-shaped polyethylene film.

Evaluation criterion:
O (good : no deposit substance on the surface film)
X ( no good : some deposit substance on the surface film )

The polyoxypropylene glycol shown in Table 1 was used as a raw material for the isocyanate group-terminated prepolymer.

The polyoxyalkylene polyol shown in Table 2 was used as a component for the curing agent.

The organic polyisocyanate shown in Table 3 was used as a raw material for the isocyanate group-terminated prepolymer. The isocyanate group-terminated prepolymer made from 4,4'-diphenylmethane diisocyanate alone or a polymethylene polyphenyl polyisocyanate containing 4,4'-diphenylmethane diisocyanate is also shown in Table 3.

### Example 1

The isocyanate group-terminated prepolymer F was prepared by the reaction of 150 parts of 4,4'-diphenylmethane diisocyanate with 850 parts of polyol A under the dry nitrogen sealed condition for 30 hours at 90 degrees C and then cooling. The resultant isocyanate group-terminated prepolymer had a NCO content of 4.0% and a viscosity of 9,700 mPa.s/25 degrees C.

The curing agent was prepared by blending 10 parts of polyol C, 90 parts of polyol D and 0.02 parts of DBU octyl acid salt.

54 Parts of the prepolymer F controlled at 70 degrees C and 100.02 parts of the curing agent controlled at 25 degrees C (The equivalent ratio of NCO group and hydroxyl group of the curing agent is 1.03.) were mixed by a propeller mixer for 1 minute and then was poured into a hot metal mold which was controlled at 80 degrees C and was cured in the heating cabinet for 30 minutes and was demolded. The pot life of the mixture was 5 minutes. The demolded molding was heated for 10 hours at 80 degrees C. Additionally, after the molding was after-cured for 7 days under the atmosphere of 25 degrees C and 60%RH, the physical properties of the resultant molding was measured. The measured results of physical properties of the moldings are shown in Table 4. The JIS A hardness was 35 and a compression set was 0.7%. Additionally, the moldings showed no bleeding. All physical properties of the moldings satisfied the target.

### Example 2

The isocyanate group-terminated prepolymer G was prepared by the reaction of 142 parts of 4,4'-diphenylmethane diisocyanate with 858 parts of polyol B in the same manner as in Example 1. The resultant isocyanate group-terminated prepolymer G had a NCO content of 4.0% and a viscosity of 15,000 mPa.s/25 degrees C.

The molding was obtained in the same manner as in Example 1 except using the prepolymer G. The pot life of mixture was 5 minutes. The measured results of physical properties of the resultant molding were shown in Table 3. The JIS A hardness was 28 and the compression set was 1.0%. Additionally, the moldings showed no bleeding. All physical properties of the molding satisfied the target.

### Example 3

The isocyanate group-terminated prepolymer H was prepared by the reaction of 155.3 parts of polymethylene polyphenyl isocyanate containing 65wt% of 4,4'-diphenylmethane diisocyanate with 844.7 parts of polyol A in the same manner as in Example 1. The resultant isocyanate group-terminated prepolymer had a NCO content of 4.0% and a viscosity of 15,000 mPa.s/25 degrees C.

The molding was obtained in the same manner as in Example 1 except using prepolymer H. The pot life of mixture was 5 minutes. The measured results of physical properties of the resultant moldings are shown in Table 3. The JIS A hardness was 33, and the compression set was 1.0%. The moldings showed no bleeding. All physical properties of the moldings satisfied the target.

### Comparative Example 1

The isocyanate group-terminated prepolymer I was prepared by the reaction of polymethylene polyphenyl isocyanate containing 50 wt% of 4,4'-diphenylmethane diisocyanate and at least 15% of 2,4'-diphenylmethane diisocyanate with a polyoxypropylene glycol having a molecular weight of 800. The isocyanate group-terminated prepolymer I had a NCO content of 28% and a viscosity of 130 mPa.s/25 degrees C.

The curing agent was prepared by blending 50 parts of polyol C, 50 parts of polyol D and 0.02 parts of DBU octyl acid salt. The molding was obtained in the same manner as in Example 1 except mixing 8 parts of isocyanate group-terminated prepolymer I controlled at 25 degrees C and 100.02 parts of curing agent controlled at 25 degrees C in a propeller mixer for 1 minute. The pot life of mixture was 10 minutes. The measured results of physical properties of the resultant moldings are shown in Table 3. JIS A hardness was 38 and the compression set was 4.2%. Additionally, water absorption ratio was increased to 5.7% because the primary hydroxyl content of terminated hydroxyl group of polyoxyalkylene polyol in the polyurethane elastomer component was increased. The moldings did not satisfy the target.

### Comparative Example 2

The isocyanate group-terminated prepolymer J was prepared by the reaction of 4,4'-diphenylmethane diisocyanate with dipropylene glycol. The resultant isocyanate group-terminated prepolymer J had a NCO content of 23% and a viscosity of 700 mPa.s/25 degrees C. 3.1 parts of 1,4-butane diol as a chain extender was mixed to a curing agent consisting of 96.9 parts of polyol (1) A and 0.02 parts of DBU octyl acid salt.

The molding was obtained in the same manner as in Example 1 except mixing 25 parts of isocyanate group-terminated prepolymer J controlled at 25 degrees C and 100.02 parts of mixture of 1,4-butane diol and curing agent controlled at 25 degrees C in a propeller mixer for 1 minute. The measured results of physical properties of the resultant moldings are shown in Table 3. The JIS A hardness was 42 and the compression set was 6.7%. The molding showed bleeding. In case that dipropylene glycol having low molecular weight was used for the polyurethane elastomer component, it caused difficulties to achieve the low hardness, the low compression set, and the bleeding occurred from molding. The physical properties did not satisfy the target.

### Comparative Example 3

The molding was obtained in the same manner as in Example 1 except using 100 parts of polyol E as the polyoxyalkylene polyol component of the curing agent.

The measured results of physical properties of the resultant moldings are shown in Table 3. The JIS A hardness was 43 and the compression set was 5.5%. Also the pot life of mixture was long, namely, 15 minutes. The resultant molding showed the bleeding. In case of using the polyol having the high degree of total unsaturation and the low primary hydroxyl content, the physical properties of moldings satisfying the target were not obtained.

**Table 1 Polyoxypropylene glycol**

| Polyol (1) | Starting material | Number-average molecular weight | Hydroxy Group Number | The degree of total unsaturation (meq/g) |
|---|---|---|---|---|
| A | Propylene glycol | 8,000 | 2 | 0.007 |
| B | Propylene glycol | 12,000 | 2 | 0.01 |

**Table 2 Polyoxyalkylene polyol**

| Polyoxyalkylene polyol | Starting material | Numberaverage molecular weight | Hydroxyl Group Number | The degree of total unsaturation (meq/g) | Primary hydroxyl content (%) |
|---|---|---|---|---|---|
| Polyol C | Propylene glycol | 4,000 | 2 | 0.01 | 87 |
| Polyol D | Glycerin | 6,000 | 3 | 0.01 | 87 |
| Polyol E | Glycerin | 3,000 | 3 | 0.05 | 40 |

**Table 3 Isocyanate group-terminated prepolymer**

| Isocyanate group-terminated prepolymer | | F | G | H |
|---|---|---|---|---|
| Organic polyisocyanate | 4,4'-Diphenylmethane diisocyanate | 150 | 142 | |
| | Polymethylene polyphenyl polyisocyanate containing 4,4'-diphenylmethane diisocyanate | | | 155.3 |
| Polyoxy propylene glycol | A | 850 | | 844.7 |
| | B | | 858 | |
| NCO content (%) | | 4.0 | 4.0 | 4.0 |
| Viscosity (mPa.s/25 degrees C) | | 9,700 | 15,000 | 15,000 |

**Table 4 Examples and Comparative Examples**

| | | Example 1 | Example 2 | Example 3 | Comparative Example 1 | Comparative Example2 | Comparative Example3 |
|---|---|---|---|---|---|---|---|
| Isocyanate group-terminated prepolymer | F | 54 | - | - | - | - | 54 |
| | G | - | 54 | - | - | - | - |
| | H | - | - | 54 | - | - | - |
| | I | - | - | - | 8 | - | - |
| | J | - | - | - | - | 25 | - |
| Curing agent | C | 10 | 10 | 10 | 50 | - | - |
| | D | 90 | 90 | 90 | 50 | - | - |
| | A | - | - | - | - | 96.9 | - |
| | E | - | - | - | - | - | 100 |
| | DBU octyl acid salt | 0.02 | 0.02 | 0.02 | 0.02 | 0.02 | 0.02 |
| Chain extender | 1,4-Butane diol | - | - | - | - | 3.1 | - |
| Isocyanate-group-terminated prepolymer/ Curing agent (NCO/OH equivalent ratio) | | 1.03 | 1.03 | 1.03 | 1.03 | 1.03 | 1.03 |
| Curing rate (pot life (min.)) | | 5 | 5 | 5 | 10 | 3 | 15 |
| Temperature of mold (degrees C) | | 80 | 80 | 80 | 80 | 80 | 80 |

| Physical properties of molded articles | | | | | | | |
|---|---|---|---|---|---|---|---|
| Hardness | JIS A | 35 | 28 | 33 | 38 | 42 | 43 |
| Tensile strength | MPa | 1.2 | 1.2 | 1.0 | 1.1 | 4.1 | 1.4 |
| Elongation | % | 140 | 130 | 150 | 120 | 380 | 100 |
| Tearing strength | KN/ m | 5.1 | 4.7 | 3.5 | 6.0 | 28.1 | 4.1 |
| Compression | set % | 0.7 | 1.0 | 1.0 | 4.2 | 6.7 | 5.5 |
| Bleeding property (surface tackiness) | | ○ | ○ | ○ | ○ | X | X |
| Water absorption | % ratio | 3.6 | 3.7 | 3.5 | 5.7 | 2.8 | 3.0 |

### Industrial Applicability

The low-hardness thermosetting polyurethane elastomer molded article of the present invention is useful in the applications such as an electric static roller, a developing roller, a transferring roller, a paper-forwarding roller, a vibration insulator and a shock absorber used in a copying machine, a facsimile machine and the like.

## Claims

1. A method of producing a thermosetting polyurethane elastomer having a compression set of at most 3 % according to JIS K7312 and a JIS A hardness of 10 to 40 as measured by a Spring-type hardness tester according to JIS K 7312, comprising mixing and reacting (1) an isocyanate group-terminated prepolymer, (2) a curing agent and optionally an additive, **characterized in that**
the isocyanate group-terminated prepolymer (1) has a NCO content from 3% to 6% by weight and is formed from (1a) an organic polyisocyanate and (1b) a polyol,
the organic polyisocyanate (1a) is 4,4'-diphenylmethane diisocyanate alone containing at most 3% by weight of 2,2' - and 2,4' - diphenylmethane diisocyanate or a polymethylene polyphenyl polyisocyanate containing 4,4'-diphenylmethane diisocyanate containing at most 3% by weight of 2,2' - and 2,4' - diphenylmethane diisocyanate,
the polyol (1b) comprises a polyoxypropylene glycol having a degree of total unsaturation of at most 0.01 meq/g, a hydroxyl group number of 2 and a number average molecular weight from 5,000 to 20,000,
the curing agent (2) comprises (2a) a polyol and (2b) a catalyst for urethane formation, and
the polyol (2a) comprises a polyoxyalkylene polyol having a degree of total unsaturation of at most 0.01 meq/g, a hydroxyl group number of 2 to 3, a number average molecular weight from 2,000 to 10,000 and a proportion of primary terminal hydroxyl group of at least 80 %.

2. A thermosetting polyurethane elastomer, obtainable by the method of producing the thermosetting polyurethane elastomer according to Claim 1, **characterized in that**
the thermosetting polyurethane elastomer exhibits a compression set of at most 3 % according to JIS K7312 and a JIS A hardness of 10 to 40 as measured by a Spring-type hardness tester according to JIS K 7312.

3. A polyurethane elastomer according to Claim 2, which is a molded article.

## Patentansprüche

1. Verfahren zur Herstellung eines wärmehärtenden Polyurethanelastomer mit einem Druckverformungsrest von höchstens 3 % gemäß JIS K 7312 und einer JIS A-Härte von 10 bis 40, gemessen mit einem Feder-Typ-Härte-Testgerät gemäß JIS K 7312, wobei man ein Isocyanatgruppenterminiertes Prepolymer (1), ein Härtungsmittel (2) und gegebenenfalls ein Additiv vermischt und das Ganze zur Reaktion bringt, **dadurch gekennzeichnet, dass**
das Isocyanatgruppen-terminierte Prepolymer (1) einen NCO-Gehalt von 3 bis 6 Gew.-% aufweist und aus einem organischen Polyisocyanat (1a) und einem Polyol (1b) gebildet wird,
das organische Polyisocyanat (1a) ein 4,4'-Diphenylmethandiisocyanat allein, enthaltend höchstens 3 Gew.-% 2,2'- und 2,4'-Diphenylmethandiisocyanat, oder ein Polymethylenpolyphenylpolyisocyanat ist, enthaltend 4,4'-Diphenylmethandiisocyanat, das höchstens 3 Gew.-% 2,2'- und 2,4'-Diphenylmethandiisocyanat enthält,
das Polyol (1b) ein Polyoxypropylenglykol mit einem Gesamtungesättigtheitsgrad von höchstens 0,01 mÄq/g, einer Hydroxylgruppenzahl von 2 und mit einem zahlendurchschnittlichen Molekulargewicht von 5.000 bis 20.000,
das Härtungsmittel (2) ein Polyol (2a) und einen Katalysator (2b) zur Urethanbildung und
das Polyol (2a) ein Polyoxyalkylenpolyol mit einem Gesamtungesättigtheitsgrad von höchstens 0,01 mÄq/g, einer Hydroxylgruppenzahl von 2 bis 3, einem zahlendurchschnittlichen Molekulargewicht von 2.000 bis 10.000 und mit einem Anteil primärer endständiger Hydroxylgruppen von mindestens 80 % umfassen.

2. Wärmehärtendes Polyurethanelastomer, erhältlich mit dem Verfahren gemäß Anspruch 1 zur Herstellung des wärmehärtenden Polyurethanelastomer, **dadurch gekennzeichnet, dass**
das wärmehärtende Polyurethanelastomer einen Druckverformungsrest von höchstens 3 % gemäß JIS K 7312 und eine JIS A-Härte von 10 bis 40, gemessen mit einem Feder-Typ-Härte-Testgerät gemäß JIS K 7312, aufweist.

3. Polyurethanelastomer gemäß Anspruch 2, das ein Formartikel ist.

## Revendications

1. Procédé de production d'un élastomère de poly(uréthane) thermodurcissable ayant une déformation rémanente à la compression d'au plus 3 % selon 1a norme JIS K7312 et une dureté JIS A de 10 à 40 mesurée par un appareil d'essai de dureté de type Spring selon la norme JIS K7312, comprenant le mélange et la réaction (1) d'un prépolymère terminé par un groupe isocyanate, (2) d'un agent de durcissement et facultativement d'un additif, **caractérisé en ce que**
le prépolymère terminé par un groupe isocyanate (1) a une teneur en NCO de 3 % à 6 % en poids et est formé (1a) d'un poly(isocyanate) organique et (1b) d'un polyol,
le poly(isocyanate) organique (1a) est du diisocyanate de 4,4'-diphénylméthane seul contenant au plus 3 % en poids de diisocyanate de 2,2'- et 2,4'-diphénylméthane ou un poly(isocyanate) de poly(phényle) poly(méthylène) contenant du diisocyanate de 4,4'-diphénylméthane contenant au plus 3 % en poids de diisocyanate de 2,2'- et 2,4'-diphénylméthane,
le polyol (1b) comprend un poly(oxypropylène glycol) ayant un degré d'insaturation totale d'au plus 0,01 meq/g, un nombre de groupes hydroxyle de 2 et une masse moléculaire moyenne en nombre de 5 000 à 20 000,
l'agent de durcissement (2) comprend (2a) un polyol et (2b) un catalyseur pour formation d'uréthane, et
le polyol (2a) comprend un polyol de poly(oxyalkylène) ayant un degré d'insaturation totale d'au plus 0,01 meq/g, un nombre de groupes hydroxyle de 2 à 3, une masse moléculaire moyenne en nombre de 2 000 à 10 000 et une proportion de groupe hydroxyle terminal primaire d'au moins 80 %.

2. Elastomère de poly(uréthane) thermodurcissable, pouvant être obtenu par le procédé de production de l'élastomère de poly(uréthane) thermodurcissable selon la revendication 1, **caractérisé en ce que**
l'élastomère de poly(uréthane) thermodurcissable présente une déformation rémanente à la compression d'au plus 3 % selon la norme JIS K7312 et une dureté JIS A de 10 à 40 mesurée par un appareil d'essai de dureté de type Spring selon la norme JIS K7312.

3. Elastomère de poly(uréthane) selon la revendication 2, qui est un article moulé.
